# EUROPEAN PATENT SPECIFICATION

(11) **EP 4 220 109 B1**
(45) Date of publication and mention of the grant of the patent: **01.04.2026**
(21) Application number: 22154546.0
(22) Date of filing: 01.02.2022
(51) Int. Cl.: G01L 1/24

(54) **OPTICAL FIBER PRESSURE SENSOR ARRAY OR GRID FOR LOCATION, VIBRATION AND/OR MOTION SENSING AND MATTRESS INCLUDING THE SAME**
FASEROPTISCHES DRUCKSENSORARRAY ODER -GITTER ZUR ORTS-, VIBRATIONS- UND/ODER BEWEGUNGSMESSUNG UND MATRATZE DAMIT
RÉSEAU DE CAPTEURS DE PRESSION À FIBRE OPTIQUE OU RÉSEAU DE LOCALISATION, DE DÉTECTION DE VIBRATIONS ET/OU DE MOUVEMENT ET MATELAS LE COMPRENANT

(43) Date of publication of application: 02.08.2023
(73) Proprietor: Luxisens Technologies B.V., 8221 EC Den Bosch (NL)
(72) Inventor: VAN DEN BOOM, Henricus Petrus Anna, 5063 EH Oisterwijk (NL); VISSER, Richard, 4128 BX Lexmond (NL)
(74) Representative: DTS Patent- und Rechtsanwälte PartmbB

(56) References cited:
- WO-A1-2021/256921
- US-A- 4 901 584
- US-A1- 2011 302 694
- US-A1- 2016 349 085
- US-A1- 2019 064 012
- US-A1- 2020 158 544

## Description

The present invention relates to the field of optical fiber pressure sensors, in particular optical fiber pressure sensors for location, vibration and/or motion sensing.

More specifically, the present invention relates to optical fiber pressure sensors, preferably Polymer Optical Fibers (POF) pressure sensors, which can be used in a mattress or be placed under a mattress for sensing and monitoring movements and/or vibrations of a subject.

For example, the pressure sensors may be configured and adapted for sensing and monitoring heart beat and/or respiration of a human.

The use of optical sensors for sensing and monitoring movements or vibrations of a subject is known in the art. For this purpose, sensors that do not require structural means (such as wires or the like) to be affixed to the body of the subject are preferred as they do not hamper the subject in his/her movements.

In particular, optical fiber pressure sensor arrays including a matrix of receiving and transmitting optical fibers arranged in a planar array are known in the art. In these known configurations, pressure sensors are defined at respective intersecting points between the fibers.

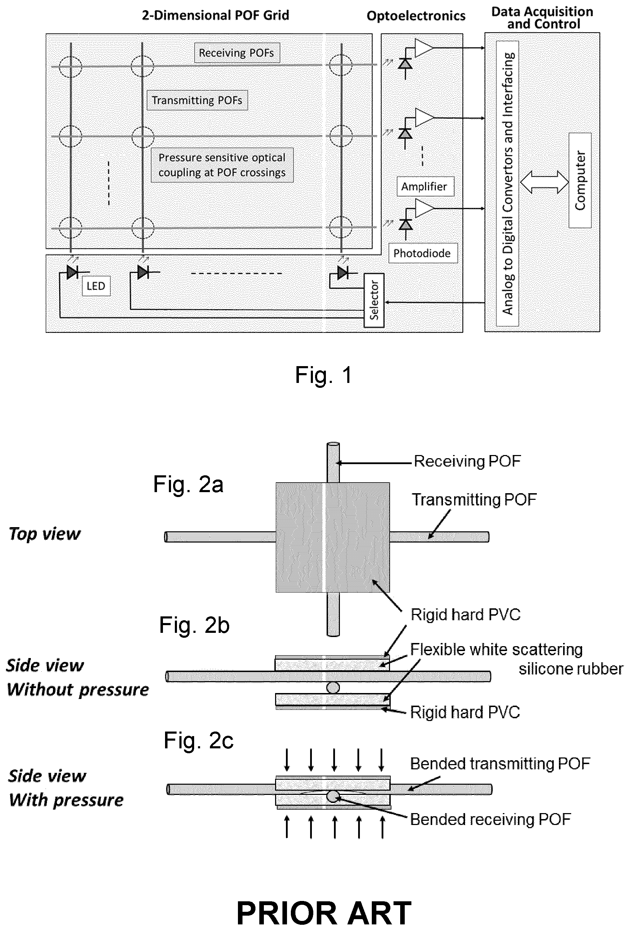

An example of a 2D pressure sensor array according to the prior art is shown in **Fig. 1****.** Here, vertical columns are scanned one-by-one.

In particular, the transmitting fibers are connected to light sources and the receiving fibers, extending in the perpendicular direction, are connected to highly sensitive optical receivers. At each crossing point, an amount of optical power can couple from the fibers carrying light to the fibers connected to the receivers, depending on the pressure exerted on the crossing. Hence each fiber crossing of the grid acts as an independent pressure sensor.

**Figs. 2a-2c** show a detail of an exemplary sensor array according to the prior art, where a plurality of receiving optical fibers, in particular Polymer Optical Fibers (POF), and a plurality of transmitting optical fibers, in particular Polymer Optical Fibers (POF), are disposed in a planar arrangement.

In the example of **Fig. 2a-2c****,** a mechanical structure including a first, internal layer made of a flexible, light-scattering material (e.g., flexible white silicone rubber) and a second, external layer made of a rigid material (e.g., polyvinyl chloride (PVC)) is provided on both sides of each pressure sensor (**Figs. 2b-2c**). The first layer may have a dimension of 10 x 10 x 1.5 mm³. The second layer may have a thickness of 0.3 mm.

When a pressure is applied on the pressure sensor as shown in **Fig. 2c****,** the flexible scattering material exerts a pressure on the optical fibers, thereby causing the optical fibers to bend slightly. As a consequence, a small amount of light, which is proportional to the applied pressure, escapes from the transmitting optical fiber. The escaped light is then scattered in all directions in the light-scattering material of the first layer and partially couples into the receiving optical fiber again.

The flexible, light-scattering material provides the optical fibers with a smoother bending radius when pressure is applied, so that forces are partly absorbed by the flexible material outside the fiber crossing point. The rigid material tends to concentrate pressure on the intersection points between the optical fibers. Thus, in the absence of the flexible material, forces would concentrate at the intersection points with the risk of causing permanent deformation.

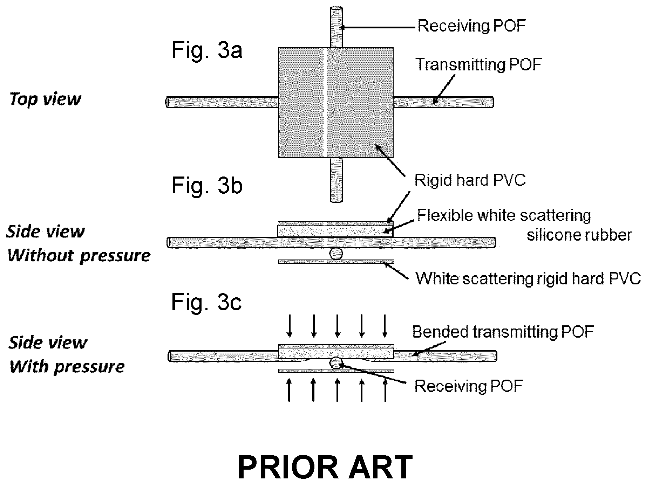

**Figs. 3a-3c** show a detail of a further exemplary sensor array according to the prior art. In particular, **Figs. 3a-3c** show an arrangement which is similar to that of **Figs. 2a-2c****,** but where the mechanical structure is only provided at one side of the pressure sensor, while a thin layer of light-scattering rigid material is provided on the other side of the pressure sensor, opposite the mechanical structure. For instance, the light-scattering rigid material can be white polyvinyl chloride (PVC) (**Figs. 3b-3c**).

EP3420331A1 discloses an optical waveguide pressure sensor array comprising two or more row optical waveguides and two or more column optical waveguides arranged in a planar array to define pressure sensors at intersection points between the optical waveguides, where a mechanical structure is provided on one or both sides of the pressure sensor to enhance waveguide bending when pressure is applied to the pressure sensor. In particular, the mechanical structure includes a first rigid ring disposed in contact with one of the row or column optical waveguides. A hole of the first rigid ring laterally encloses the intersection point of the pressure sensor. The optical waveguide pressure sensor array is configured to sense pressure by providing light to the row optical waveguides and measuring light coupled to the column optical waveguides, or vice versa. The optical waveguide pressure sensor array of EP3420331A1 is configured and adapted for use in a mattress for sensing and monitoring movements of a subject.

EP0089237A2 discloses a photo-optical switch apparatus including a photopolymerized orthogonal matrix of horizontal and vertical intersecting light channels or guides, monolithically formed by exposure to ultraviolet light on a flat planar, plastic substrate. Each intersection has a refractive index higher than either the channel or the adjacent substrate area. A curved tap or light coupler couples the horizontal to the vertical channel of the array. The intersections of the channels are disposed over an array of upstanding projections on a flat mounting substrate with each projection located at a respective intersection of the horizontal and vertical light channel. A light absorbing key pad is arranged over each intersection to couple light from the channel up into the key pad. A relative loss of light indicates the key being depressed.

US4733068 discloses a fiber optic sensor array including a row of transmitting optical fibers, with a column of detecting optical fibers overlapping the transmitting fibers. A planar compliant spacer separates the transmitting fibers from the detecting fibers, so that a sensor element is defined at each location where a detecting fiber overlaps a transmitting fiber. The surfaces of each transmitting fiber and each receiving fiber are modified at the location of each sensor element to increase the optical coupling between the transmitting fiber and the receiving fiber at that element. The spacer in the array includes an opening between the transmitting fiber and the detecting fiber at the location of each sensor element. A support surface is affixed to the detecting fibers opposite the compliant spacer and a protective cover layer is affixed to the transmitting fibers opposite the compliant spacer. An array of light emitting elements, with each element in the emitting array being adapted to transmit light into one of the transmitting fibers, and an array of light detecting elements, each element in the detecting array being adapted to detect light emanating from one of the detecting fibers are provided. A clock times the emission of light from each emitting element and times the detection of light at each detecting element. The clock is connected to cause each detecting element to detect light in sequence after each emitting element has emitted light.

WO2021/256921A1 discloses a two-dimensional optical waveguide pressure sensor array including two or more row optical waveguides and two or more column optical waveguides. The row optical waveguides and the column optical waveguides are deformable and arranged in a planar array to define a sensor at their crosspoints. In particular, each crosspoint includes one of the row optical waveguides in contact with one of the column optical waveguides at their intersection point. A light coupling structure is provided at one or both sides of the pressure sensor to enhance waveguide bending when a pressure is applied at the crosspoint.

However, there is the need for an improved optical fiber sensor array for location sensing having enhanced sensitivity, thereby allowing more precisely and reliably sensing and monitoring movements of a subject.

It is therefore an object of the present invention to provide an optical fiber pressure sensor array for location sensing having improved sensitivity.

The aforesaid object is achieved by the provision of an optical fiber pressure sensor array or grid for location, vibration and/or motion sensing according to claim 1.

The optical fiber pressure sensor array or grid can be incorporated in a mattress.

Alternatively, the optical fiber pressure sensor array or grid can be placed under a mattress.

The sensor array or grid includes a plurality of receiving optical fibers.

The sensor array or grid further includes a plurality of transmitting optical fibers.

Preferably, said optical fibers are Polymer Optical Fibers (POF), which thereby define a POF pressure sensor array or grid.

Preferably, the optical fibers are made of Poly (methyl methacrylate) (PMMA).

Said plurality of receiving optical fibers and said plurality of transmitting optical fibers are arranged in a planar array or grid to define pressure sensors at respective intersecting points.

A mechanical structure may be provided at both sides of the pressure sensor.

Alternatively, the mechanical structure may be provided at one side of the pressure sensor.

In such a case, a rigid, light-scattering layer is provided at the other side of the pressure sensor, opposite the mechanical structure.

Preferably, said rigid light-scattering layer is made of white polyvinyl chloride (PVC).

In particular, it is possible that the mechanical structure around a crossing can consist either of at one side a flexible and light scattering silicon based material and at the other side nothing (first possible alternative), or at both side a flexible and light scattering silicon based material (second possible alternative), or at one side a flexible and light scattering silicon based material and on the other side a hard rigid light scattering material like PVC (third possible alternative). For all three options there's another possibility to enter a thin flexible and light scattering silicon-based material in between the fibers. Of course, further alternatives or combination of the alternatives are possible.

The mechanical structure allows to enhance fiber bending when a pressure is applied to the pressure sensor.

The mechanical structure includes a first, internal layer which contacts the optical fibers.

The first layer is made of a flexible, light-scattering material.

The mechanical structure further includes a second, external layer, made of a rigid material.

In the present embodiment, said plurality of receiving optical fibers and/or said plurality of transmitting optical fibers is curved with a predefined diameter at the intersecting point defining the pressure sensor.

For instance, only the transmitting optical fibers may be curved at the intersecting point defining the pressure sensor.

Alternatively, only the receiving optical fibers may be curved at the intersecting point defining the pressure sensor.

Alternatively, both the transmitting and the receiving optical fibers can be curved at the intersecting point defining the pressure sensor.

By the provision of transmission optical fibers and/or the receiving optical fibers that are curved at respective intersecting points, sensor sensitivity may be significantly increased. In particular, the curvature of one or both optical fibers at the intersecting point (which defines the pressure sensor) allow more light to escape from the transmitting optical fiber at the intersecting point, Further, more light is enabled to couple into the receiving optical fiber at the intersecting point, thereby increasing sensor sensitivity.

Preferably, the first layer of the mechanical structure is made of a white silicone rubber.

Preferably, the second layer of the mechanical structure is made of polyvinyl chloride (PVC).

Further, the aforesaid object is achieved by the provision of an optical fiber pressure sensor array or grid for location, vibration and/or motion sensing according to claim 5.

The optical fiber pressure sensor array or grid can be incorporated in a mattress.

Alternatively, the optical fiber pressure sensor array or grid can be placed under a mattress. The sensor array or grid includes a plurality of receiving optical fibers.

The sensor array or grid further includes a plurality of transmitting optical fibers.

Preferably, said optical fibers are Polymer Optical Fibers (POF), which thereby define a POF pressure sensor array or grid.

Preferably, the optical fibers are made of Poly(methyl methacrylate) (PMMA).

A corrugated mechanical structure is povided at one or both sides of the optical fibers.

Alternatively, the mechanical structure may be provided at one side of the pressure sensor.

In such a case, a corresponding rigid, light-scattering layer is provided at the other side of the pressure sensor, opposite the mechanical structure.

Preferably, said rigid, light-scattering layer is made of white polyvinyl chloride (PVC).

The mechanical structure allows to establish an optical coupling between the transmitting and receiving optical fibers when a pressure is exerted on the optical fibers.

The mechanical structure includes a first, internal layer contacting the fibers.

The first layer is made of a flexible, light-scattering material.

The mechanical structure further includes a second, external layer, made of a rigid material. Preferably, the second layer is made of a corrugated rigid material.

In the present embodiment, said plurality of receiving optical fibers and said plurality of transmitting optical fibers extend in parallel in a planar array or grid.

In the present embodiment, when pressure is applied over a small or longer length of the optical fibers, the flexible, light-scattering material of the first layer establishes an optical coupling between the transmitting optical fiber and receiving optical fiber, which depends on the exerted pressure and the length. Further, the corrugated rigid material of the second layer allows for an extra macro-bending in both the transmitting and the receiving optical fibers, thereby enhancing optical coupling and sensor sensitivity.

Adjacent optical fibers may be in contact with each other.

Alternatively, a gap may be defined between adjacent optical fibers.

Preferably, the first layer of the mechanical structure is made of white silicone rubber.

Preferably, the second layer the mechanical structure is made of polyvinyl chloride (PVC).

More preferably, the second layer the mechanical structure is made of corrugated polyvinyl chloride (PVC).

The mechanical structure may include multiple segments.

Preferably, said multiple segments can be individually controlled.

Finally, the present invention provides a mattress including an optical fiber pressure sensor array or grid for location, vibration and/or motion sensing according to any one of the above-described embodiments of the present invention. By providing the mattress with the optical fiber pressure sensor array or grid according to the invention, it is possible to more reliably sensing and monitoring movements and/or vibrations of a subject, preferably a human, that is located (e.g., lying) on the mattress.

Further details and advantages of the present invention shall now be disclosed in connection with the drawings.

It is shown in
- **Fig. 1**: a diagram showing an example of a 2D pressure sensor array according to the prior art;
- **Fig. 2a**: a schematic overview of a detail of an exemplary optical fiber pressure sensor array for location sensing according to the prior art, where a mechanical structure is provided on both sides of a pressure sensor defined at the intersection point between optical fibers;
- **Fig. 2b**: a side view of the detail of Fig. 1a, in a condition where no pressure is exerted on the pressure sensor;
- **Fig. 2c**: a side view of the detail of Fig. 1a, in a condition where pressure is exerted on the pressure sensor;
- **Fig. 3a**: a schematic overview of a detail of another exemplary optical fiber pressure sensor array for location sensing according to the prior art, where a mechanical structure is provided on one side of a pressure sensor defined at the intersection point between optical fibers;
- **Fig. 3b**: a side view of the detail of Fig. 2a, in a condition where no pressure is exerted on the pressure sensor;
- **Fig. 3c**: a side view of the detail of Fig. 2a, in a condition where pressure is exerted on the pressure sensor;
- **Fig. 4**: a schematic overview of a detail of an experimental setup of the optical fiber pressure sensor array for location, vibration and/or motion sensing according to the invention;
- **Fig. 5a**: a schematic overview of a detail of an optical fiber pressure sensor array for location, vibration and/or motion sensing according to a first embodiment of the present invention, where a mechanical structure is provided on one side of a pressure sensor defined at the intersection point between optical fibers;
- **Fig. 5b**: a side view of the detail of Fig. 4a, in a condition where no pressure is exerted on the pressure sensor;
- **Fig. 6**: a diagram showing receiver output voltage as a function of applied weight in the embodiment of Fig. 4a;
- **Fig. 7a**: a schematic overview of an optical fiber pressure sensor array for location, vibration and/or motion sensing according to a second embodiment of the present invention, where a mechanical structure is provided on both sides of the fibers;
- **Fig. 7b**: a side view of the optical fiber pressure sensor array of Fig. 6a in a condition where no pressure is exerted on the fibers;
- **Fig. 7c**: a side view of the optical fiber pressure sensor array of Fig. 6a, in a condition where pressure is exerted on the fibers;
- **Fig. 8**: a side view of a configuration similar to that of Fig. 6a, but where the mechanical structure is provided on one side of the fibers;
- **Fig. 9**: a diagram showing receiver output voltage as a function of applied weight in the configuration of Fig. 7;
- **Fig. 10a**: a top view of another configuration of the fiber pressure sensor array according to the present embodiment, where the mechanical structure includes multiple segments;
- **Fig. 10b**: a side view of the configuration of Fig. 9a;
- **Fig. 11**: a schematic overview from the top and from the side of yet another configuration according to the present embodiment, where the mechanical structure includes multiple individually detectable segments;
- **Fig. 12a**: a schematic overview of a detail of an optical fiber pressure sensor array for location, vibration and/or motion sensing according to a third embodiment of the present invention;
- **Fig. 12b**: a side view of the detail of Fig. 11a, in a condition where no pressure is exerted on a pressure sensor defined at the intersection point between optical fibers;
- **Fig. 13**: a diagram showing receiver output voltage as a function of applied weight in the embodiment of Fig. 11a;
- **Fig. 14a**: a schematic overview of a detail of an optical fiber pressure sensor array for location sensing according to a fourth embodiment of the present invention;
- **Fig. 14b**: a side view of the detail of Fig. 13a;
- **Fig. 15a**: a schematic overview of a detail of an optical fiber pressure sensor array for location, vibration and/or motion sensing according to a further configuration of the present embodiment;
- **Fig. 15b**: a side view of the detail of Fig. 14a;
- **Fig. 16**: a POF pressure sensor with multiple crossings to detect larger areas; and
- **Fig. 17**: a POF pressure sensor with multiple crossings in a row.

A detailed description of embodiments of the present invention is provided in the following.

### Experimental measurement setup

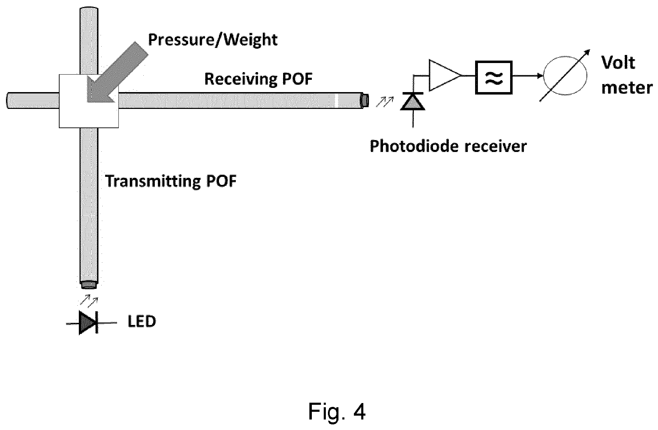

The below discussed experimental results refer to experiments that have been carried out by using the experimental measurement setup that is schematically shown in **Fig. 4****.**

In particular the following experimental measurement setup has been used:

| Fiber type | ESKA^{®} CK20, Mitsubishi Rayon, 0.5 mm diameter Step Index PMMA POF |
|---|---|
| Cladding diameter | 500 µm |
| Core diameter | 486 µm |
| First layer of the mechanical structure | Flexible white scattering silicone rubber, dimensions: 10 x 10 x 1.5 mm³ |
| Second layer of the mechanical structure | Rigid polyvinyl chloride (PVC) |
| Optical power coupled by the LED into the transmitting POF | 1 mW |
| Sensitivity photodiode receiver | 0.4 V/nW |

The below described embodiments relate to an optical fiber pressure sensor array for location, vibration and/or motion sensing of a subject, preferably a human.

Alternatively, an optical fiber pressure sensor grid can be used.

The optical fiber pressure sensor array or grid according to the invention can be incorporated in a mattress for sensing movements and/or vibrations of a subject, preferably a human, that is placed (e.g., lying) on the mattress.

Alternatively, the optical fiber pressure sensor array or grid can be located under a mattress.

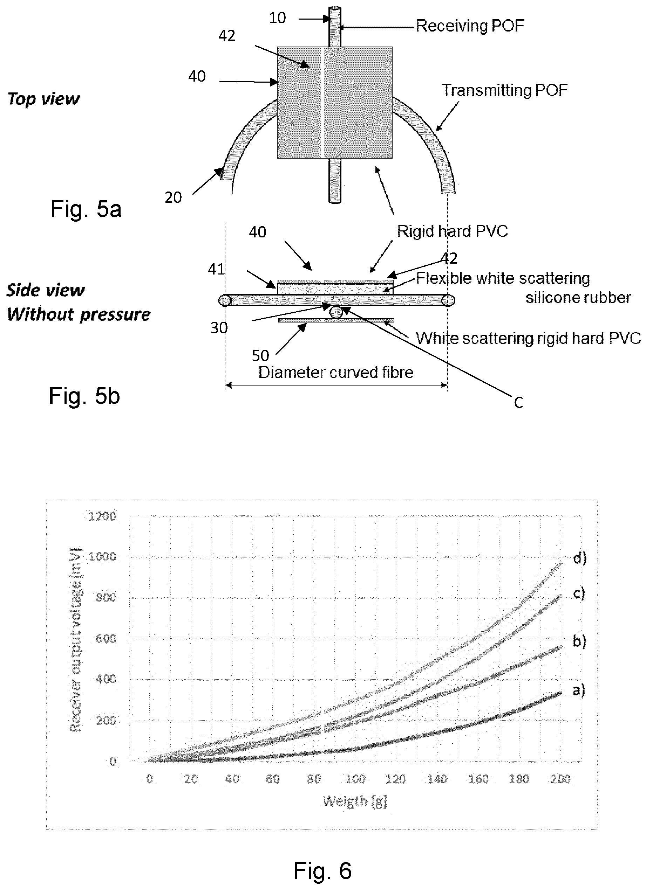

**Fig. 5a** schematically shows a detail of an optical fiber pressure sensor array for location, vibration and/or motion sensing according to a first embodiment of the present invention.

The optical fiber pressure sensor array includes a plurality of receiving optical fibers 10.

The optical fiber pressure sensor array further includes a plurality of transmitting optical fibers 20.

In the present embodiment, the optical fibers 10, 20 are Polymer Optical Fibers (POF).

Preferably, wherein the optical fibers 10, 20 are made of made of Poly(methyl methacrylate) (PMMA).

The plurality of receiving optical fibers 10 and the plurality of transmitting optical fibers 20 are arranged in a planar array to define pressure sensors 30 at respective intersecting points (**Fig**. **5b**).

In the shown configuration, a mechanical structure 40 is provided on one side of the pressure sensor (**Fig. 5b**).

In particular, the mechanical structure 40 is provided on top of the pressure sensor 30.

According to an alternative configuration (not shown), the mechanical structure 40 can be provided at both sides of the pressure sensor 30.

The mechanical structure 40 allows to enhance fiber bending when a pressure is applied to the pressure sensor 30.

In the present embodiment, the plurality of receiving optical fibers 10 and/or the plurality of transmitting optical fibers 20 is curved at the intersecting point defining the pressure sensor 30.

In the shown configuration, only the transmitting optical fibers 20 are curved at the intersecting point defining the pressure sensor 30 (**Fig. 5a**).

According to an alternative configuration (not shown), only the receiving optical fibers 20 may be curved at the intersecting point defining the pressure sensor 30.

According to yet another alternative configuration, both the receiving and the transmitting optical fibers 10, 20 may be curved at the intersecting point defining the pressure sensor 30.

The mechanical structure 40 includes a first, internal layer 41, which is in contact with the optical fibers 10, 20.

The first layer 41 is made of a flexible, light-scattering material.

In the present embodiment, the first layer 41 is made of white silicone rubber.

The mechanical structure 40 further includes a second, external layer 42 made of a rigid material.

In the present embodiment, the second layer 42 is made of polyvinyl chloride (PVC).

In the present embodiment, a rigid, light-scattering layer 50 is provided at the other side of the pressure sensor 30, opposite the mechanical structure 40.

In the present embodiment, the light-scattering layer 50 is made of white polyvinyl chloride (PVC).

By the provision of transmitting optical fibers 20 and/or receiving optical fibers 10 that are curved at the intersecting point C (also crossing C) defining the pressure sensor 30, sensor sensitivity can be significantly improved. In particular, the curvature of the fibers 10, 20 allows a larger amount of light to escape from the transmitting fibers 20 at the intersecting point.

Further, more light is enabled to couple into the receiving fibers 10 at the intersecting point, thereby increasing sensor sensitivity.

**Fig. 6** shows receiver output voltage as a function of applied weight for different diameters of the curved transmitting optical fiber 20 in the configuration of **Fig. 5a****.**

Experimental data have shown that, by decreasing the diameter of the curve of the transmitting optical fiber 20 at the intersecting point, it is possible to obtain an increase in sensitivity because of the effect of macro bending which already exists in the transmitting optical fiber 20, this allowing more light to escape.

In particular:
**a)** shows receiver output voltage as a function of applied weight in a case where a straight transmitting optical fiber is used (no curvature):
**b)** shows receiver output voltage as a function of applied weight in a case where a curved transmission optical fiber having a diameter of 50 mm is used;
**c)** shows receiver output as a function of applied weight in a case where a curved transmission optical fiber having a diameter of 40 mm is used, and
**d)** shows receiver output voltage as a function of applied weight in a case where a curved transmission optical fiber having a diameter of 30 mm is used.

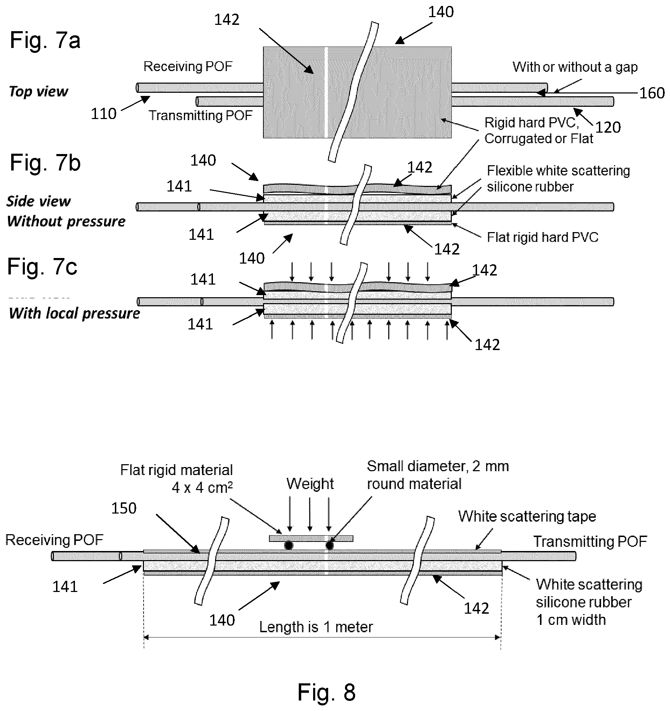

**Fig. 7a** schematically shows an optical fiber pressure sensor array for location, vibration and/or motion sensing according to a second embodiment of the present invention.

The optical fiber pressure sensor array includes a plurality of receiving optical fibers 110.

The optical fiber pressure sensor array further includes a plurality of transmitting optical fibers 120.

In the present embodiment, the optical fibers 110, 120 are Polymer Optical Fibers (POF).

Preferably, the optical fibers 110, 120 are made of made of Poly(methyl methacrylate) (PMMA).

In the present embodiment, said plurality of receiving optical fibers 110 and said plurality of transmitting optical fibers 120 extend in parallel in a planar array (**Figs. 7a-7c**).

A mechanical structure 140 is provided at one or both sides of the optical fibers 110, 120.

In the configuration of **Figs. 7a-7c****,** the mechanical structure 140 is provided at both sides of the optical fibers 110, 120.

The mechanical structure 140 allows to establish an optical coupling between the transmitting and receiving optical fibers 110, 120 when a pressure is exerted on the optical fibers 110, 120 (**Fig. 7c**).

The mechanical structure 140 includes a first, internal layer 141 contacting the optical fibers 110, 120.

The first layer 141 is made of a flexible, light-scattering material.

In the present embodiment, the first layer 141 is made of white silicone rubber.

The mechanical structure 140 further includes a second, external layer 142 made of a rigid material.

In the present embodiment, the second layer 142 is made polyvinyl chloride (PVC).

The second layer 142 is corrugated. In particular, **Figs. 7b-7c** show a configuration where the second layer 142 of the mechanical structure 140 placed on top of the fibers 110, 120 is corrugated.

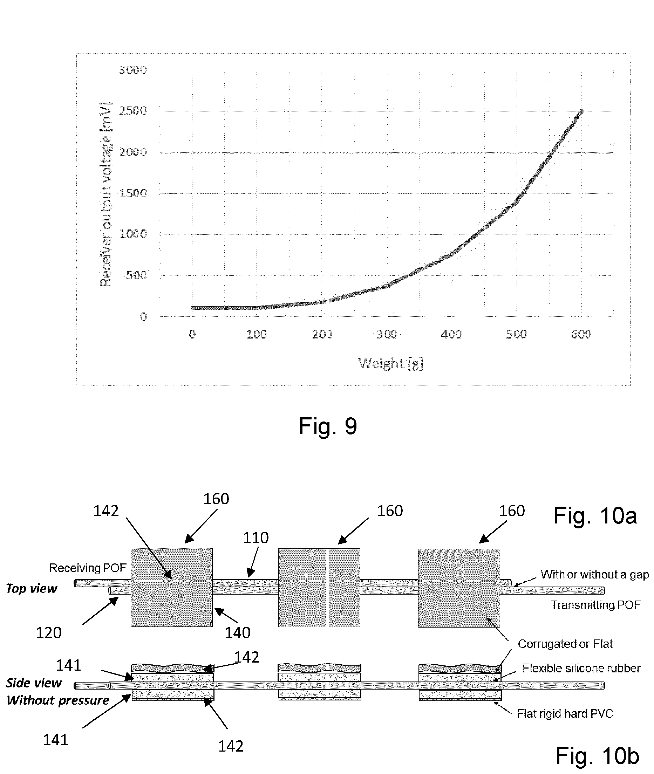

In the configuration of **Fig. 7a****,** a gap 160 is defined between adjacent optical fibers 110, 120. Alternatively, the adjacent optical fibers 110, 120 may be in contact with each other (**Figs. 10a-****10b**).

When pressure is applied over a small or longer length of the optical fibers 110, 120 (depending on the dimensions and/or shape of the mechanical structure 140), the first layer 141 establishes an optical coupling between the transmitting and receiving optical fibers 110, 120, which depends on pressure and length.

The use of a corrugated rigid material for the second layer 142 allows introducing extra macro-bending in both optical fibers 110, 120, thereby increasing optical coupling and sensor sensitivity.

**Fig. 8** shows a configuration that is similar to the one of **Fig. 7a****,** but where the plurality of mechanical structures 140 with the first layer 141 and the second layer 142 is provided at one side of the fibers 110, 120 and are used for an experimental verification. In this experiment, the corrugated layer 142 is realized with a flat rigid piece of material with round material with a small diameter underneath.

Here, a rigid, light-scattering layer 150 is provided at the other side of the optical fibers 110, 120, opposite the mechanical structure 140.

In the present embodiment, the light-scattering layer 150 is made of white polyvinyl chloride (PVC).

**Fig. 9** shows receiver output voltage as a function of applied weight in the configuration of **Fig. 8** When pressure is applied on the rigid, light-scattering layer 150, the round material underneath this layer 150 determines a macro bending in both the receiving and transmitting optical fibers 110, 120, thereby increasing optical power coupling between both fibers 110, 120.

The mechanical structure 140 with the first layer 141 and the second layer 142 may have a rectangular shape (**Fig. 7a**).

Alternatively, the mechanical structure 140 may have a substantially square shape (**Fig. 10a**).

Further configurations of the mechanical structure are possible as far as they are suitable for the purpose.

**Figs. 10a-10b** show another configuration of the optical fiber pressure sensor array according to the present embodiment, where the mechanical structure 140 includes multiple segments 160.

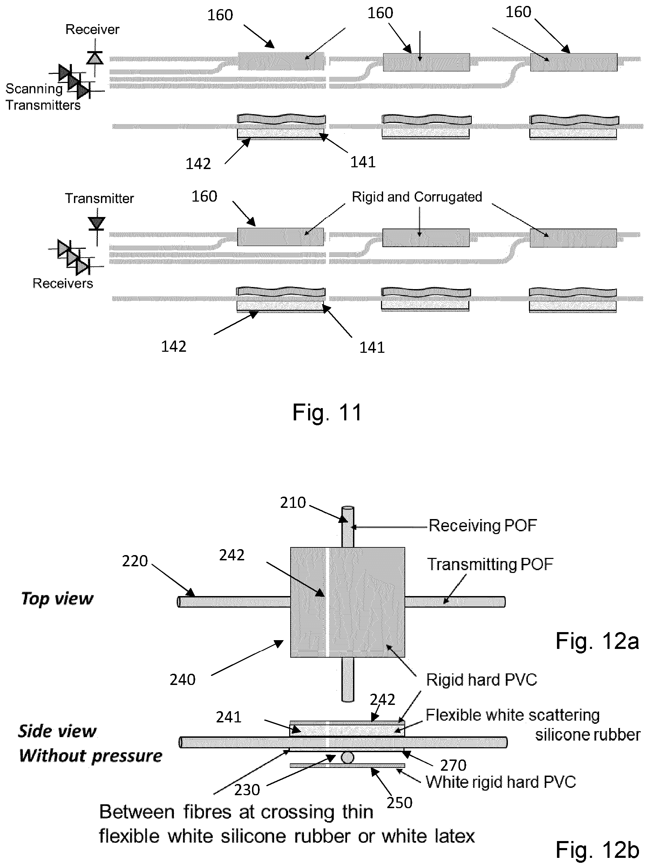

**Fig. 11** shows yet another configuration of the optical fiber pressure sensor array according to the present embodiment, which is similar to the one of **Figs. 10a-10b****,** but where the multiple segments 160 of the mechanical structure 140 with the first layer 141 and the second layer 142 are individually detectable.

**Fig. 12a** schematically shows a detail of an optical fiber pressure sensor array for location, vibration and/or motion sensing according to a third embodiment of the present invention.

The optical fiber pressure sensor array includes a plurality of receiving optical fibers 210.

The optical fiber pressure sensor array further includes a plurality of transmitting optical fibers 220.

In the present embodiment, the optical fibers 210, 220 are Polymer Optical Fibers (POF).

Preferably, the optical fibers 210, 220 are made of made of Poly(methyl methacrylate) (PMMA).

The plurality of receiving optical fibers 210 and the plurality of transmitting optical fibers 220 are arranged in a planar array to define pressure sensors 230 at respective intersecting points (**Fig. 12b**).

A mechanical structure 240 is provided at one or both sides of each pressure sensor 230.

In the shown configuration, the mechanical structure 240 is provided at one side of the pressure sensor 230.

According to an alternative configuration (not shown) the mechanical structure 240 can be provided at both sides of the pressure sensor 230.

The mechanical structure 240 allows to enhance fiber bending when a pressure is applied to the pressure sensor 230.

In the present embodiment, an additional layer 270 made of a flexible, light-scattering material is interposed between the optical fibers 210, 220 at the intersection point (**Fig. 12b**).

Preferably, the additional layer 270 is made of flexible white silicone rubber.

Alternatively, the additional layer 270 is made of flexible white latex.

The presence of the additional layer 270 interposed between the optical fibers 210, 220 provides protection for the fibers 210, 220 at the intersecting point.

The mechanical structure 240 includes a first, internal layer 241 contacting the optical fibers 210, 220.

The first layer 241 is made of a flexible, light-scattering material.

In the present embodiment, the first layer 241 is made of white silicone rubber.

The mechanical structure 240 further includes a second, external layer 242 made of a rigid material.

In the present embodiment, the first layer 242 is made of is made of polyvinyl chloride (PVC).

In the present embodiment, a rigid, light-scattering layer 250 is provided at the other side of the pressure sensor 230, opposite the mechanical structure 240.

In the present embodiment, the light-scattering layer 250 is made of white polyvinyl chloride (PVC).

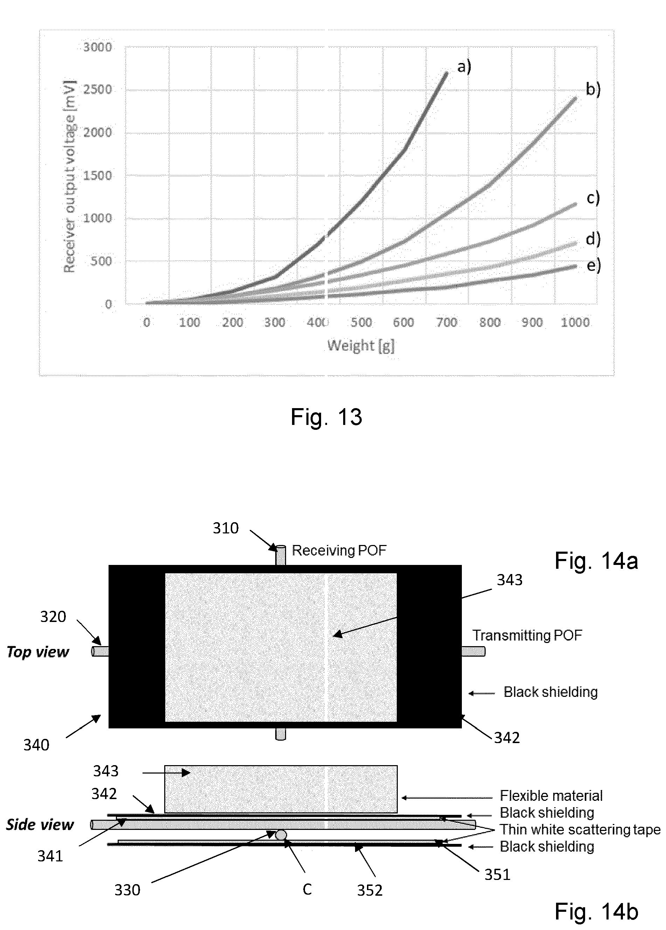

**Fig. 13** shows receiver output voltage as a function of applied weight in the configuration of **Figs. 12a-12b** for various thicknesses of the additional layer 270. The additional layer 270 of flexible scattering material determines a decrease in sensitivity because macro bending is decreased by adding flexible material between the receiving and transmitting optical fibers 210, 220. In particular, experimental results have shown that the thicker this flexible layer 270 is, the more the sensitivity is lowered0. However, the overall robustness is improved.

In particular:
**a)** shows receiver output voltage as a function of applied weight in a case where no additional layer is provided;
**b)** shows receiver output voltage as a function of applied weight in a case where an additional layer having a thickness of 0.05 mm is interposed between the fibers at the intersecting point;
**c)** shows receiver output voltage as a function of applied weight in a case where an additional layer having a thickness of 0.1 mm is interposed between the fibers at the intersecting point;
**d)** shows receiver output voltage as a function of applied weight in a case where an additional layer having a thickness of 0.15 mm is interposed between the fibers at the intersecting point, and
e) shows receiver output voltage as a function of applied weight in a case where an additional layer having a thickness of 0.2 mm is interposed between the fibers at the intersecting point.

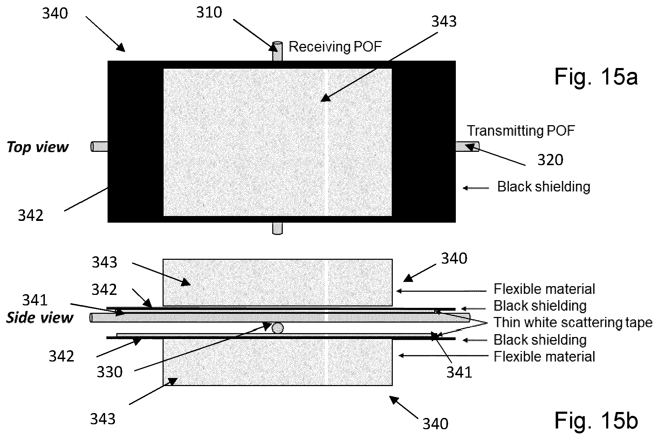

**Figs. 14a-14b** and **Figs. 15a-15b** schematically shows a detail of an optical fiber pressure sensor array for location, vibration and/or motion sensing according to a fourth embodiment of the present invention.

The optical fiber pressure sensor array includes a plurality of receiving optical fibers 310.

The optical fiber pressure sensor array further includes a plurality of transmitting optical fibers 320.

In the present embodiment, the optical fibers 310, 320 are Polymer Optical Fibers (POF).

Preferably, wherein the optical fibers 310, 320 are made of made of Poly(methyl methacrylate) (PMMA).

The plurality of receiving optical fibers 310 and said plurality of transmitting optical fibers 320 are arranged in a planar array to define pressure sensors 330 at respective intersecting points (**Figs. 14b** and **15b**).

A mechanical structure 340 can be provided at one or both sides of each pressure sensor 330.

The mechanical structure 340 allows to enhance fiber bending when a pressure is applied to the pressure sensor 330.

In the present embodiment, the mechanical structure includes a first, internal layer 341 in contact with the optical fibers 310, 320.

The first layer 341 is made of a white scattering tape.

In the present embodiment, the mechanical structure 340 further includes a second, intermediate layer 342.

The second, intermediate layer 342 is made of a black shielding material.

In the present embodiment, the mechanical structure 340 further includes a third, external layer 343.

The third layer 343 is made of a flexible material.

There is also a crossing C of the optical fibers 310, 320.

**Figs. 14a-14b** show a configuration where the mechanical structure 340 is provided on one side (e.g., on top) of the pressure sensor 330.

In this configuration, a first, internal layer 351 and a second external layer 352 are provided at the other side of the pressure sensor 330, opposite the mechanical structure 340.

The internal layer 351 is made of a white scattering tape.

The second layer 352 is made of a black shielding material.

**Figs. 15a-15b** show an alternative configuration where the mechanical structure 340 is provided on both sides of the pressure sensor 330.

By providing a mechanical structure 340 including white scattering tape 341, an intermediate layer of black shielding material 342 and a flexible material 343, sensor sensitivity can be significantly enhanced.

The present invention further provides a mattress (not shown) including the optical fiber pressure sensor array or grid for location, vibration or motion sensing according to any one of the above-described embodiments. By implementing a mattress with the optical fiber pressure sensor array or grid for location, vibration or motion sensing according to the invention, it is possible to reliably sense and monitor movements of a subject, preferably a human, that is present (e.g., lying) on the mattress.

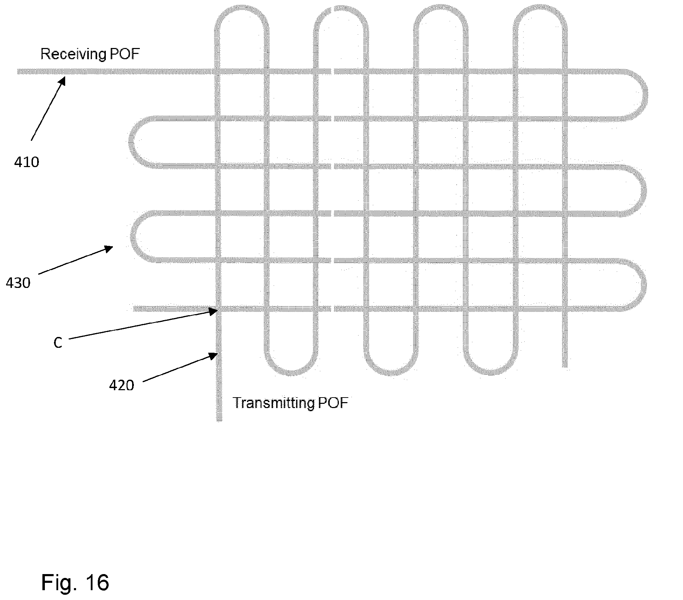

**Fig. 16** shows a further possible embodiment of the present invention, here an optical fiber pressure sensor 430, i.e. a POF pressure sensor 430 with multiple crossings C to detect larger areas.

In **Fig. 16** a sensor configuration is shown with only one receiving fiber 410 and one transmitting fiber 420 and multiple crossings C to detect larger areas.

Each crossing can be provided with flexible white scattering material on one side or both sides and rigid material as described earlier. This simplified configuration can be used in situations where only vibration and/or motion has to be detected on large areas and location in not important.

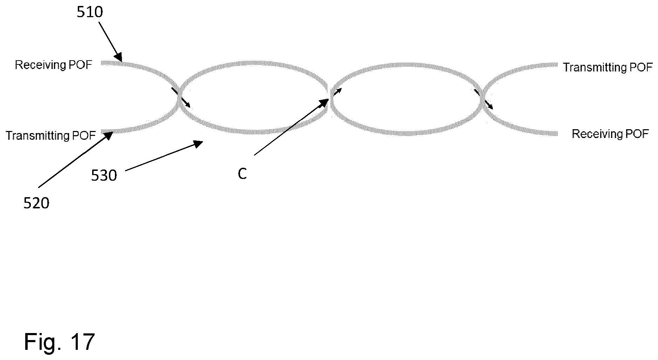

**Fig. 17** shows another possible embodiment of the present invention, here a further optical fiber pressure sensor 530, i.e. a POF pressure sensor 530 with multiple crossings C in a row. Also here, there is a receiving fiber 510 and a transmitting fiber 520.

In **Fig. 17** a sensor configuration is shown again with only one transmitting and one receiving fiber and multiple crossings to detect only vibration and/or motion in one direction. Each crossing C can be provided with flexible white scattering material on one side or both sides and rigid material as described earlier.

### Potential applications

The optical fiber pressure sensor array or grid of the invention is suitable for use in the following applications.

### Patient monitoring

Further, the optical fiber pressure sensor array or grid of the invention can be used for monitoring position(s), vital function(s) or disease symptom(s) of a patient (either an adult or a child) that is laying on a bed.

By this, for example the sudden infant death syndrome (SIDS) could be detected. It is possible that the breathing and e.g. also the heartbeat, but also the normal movements of an infant can be detected with the mattress. If an unphysiological condition is detected, this can trigger a warning for the parents and this way a pre-warning and fast reaction time is possible.

For the monitoring of adults, such a mattress can be used to monitor whether elderly people are using their bed during the sleeping times in the night, and if this is not the case, this could trigger a warning message for nurses or people taking care of such people. Especially falling events of such people are dangerous, as in case they are detected to late, severe injuries and also dehydration and other acute situations may be present or develop until the person is found. Especially in cases, where elderly people only get assistance in part-time and do not have a full-time care personnel around and still live alone, this enhances the safety for such people. Also, a mattress can be placed on the floor of the bathroom or other rooms, to detect falling events.

The optical fiber pressure sensor array or grid can be incorporated in a mattress.

Alternatively, the optical fiber pressure sensor array or grid can be positioned under a mattress.

In particular, the optical fiber pressure sensor array or grid can be used for the following purposes:
- provide out-of bed alerts;
- fall detection and/or prevention;
- sleep tracking:
   - wellness monitoring;
   - sleep disorders detection and/or prevention:
      - epilepsy attack early detection;
      - sudden infant death prevention.

In case of early-born children, the optical fiber pressure sensor array or grid of the invention may be incorporated in a mattress suitable for placement into an incubator.

Alternatively, the optical fiber pressure sensor array or grid can be positioned under a mattress suitable for placement into an incubator.

In particular, the optical fiber pressure sensor array or grid can be used as an incubator for the following purposes:
- pressure point location;
- weight measuring or monitoring;
- body movements detection (2D).

Still further, the optical fiber pressure sensor array or grid of the invention can be used in physiotherapy.

For instance, the optical fiber pressure sensor array or grid can be incorporated in a specifically-designed mattress, or seating and/or body movement monitoring systems for physiotherapy.

In particular, the optical fiber pressure sensor array or grid can be adapted for detecting and monitoring weight distribution over the sole of the foot or position(s) of the patient's body during physiotherapy.

### Security monitoring

The optical fiber pressure sensor array or grid of the invention can be used for security purposes against intrusion of un-allowed bodies or subject(s) and/or unwanted departure of bodies or subjects within a predefined area in a home environment, office(s), industrial building(s), governmental buildings or the like.

In particular, the optical fiber pressure sensor array or grid can be configured to detect the presence of one or more intruders or breakaways or a change in physical position of objects, so that an alarm can be operated accordingly.

In particular, the optical fiber pressure sensor array or grid may be configured to:
- distinguish human subjects from other objects that might be present in the predefined area;
- recognize initiatives to leave or enter within the monitored area;
- recognize directions in the movement of subjects;
- recognize changes in position of objects;
- recognize changes in weight of objects;
- recognize physical condition(s) of one or more subjects that are present within the monitored area.

### Safety monitoring

The optical fiber pressure sensor array or grid of the invention can be used for monitoring of large objects.

### Traffic light efficiency/crosswalk safety/traffic safety

The optical fiber pressure sensor array or grid of the invention can be used for detecting the presence of subject(s) and/or object(s) approaching a crosswalk or the like.

In particular, the optical fiber pressure sensor array or grid may be configured to:
- detect the presence of approaching human(s), animal(s) or object(s);
- detect one or more directions of said approaching human(s), animal(s) or object(s).

### Traffic jam detection and control

The optical fiber pressure sensor array or grid of the invention can be used for detecting the number of vehicles that are travelling in a predefined area (e.g., a predefined portion of a road) as well as their respective travelling directions, and predict if and when the traffic condition may turn into a traffic jam, such that an input can be provided to control the traffic and prevent or largely reduce the occurrence of traffic jam.

### Sports and training

The optical fiber pressure sensor array or grid of the invention can be used in sports/training applications.

In particular, the optical fiber pressure sensor array can be used in the following applications:
- virtual line monitoring. The optical fiber pressure sensor array accurately detects if and when a ball and/or player(s) cross a preset (virtual) line;
- body position improvements. The optical fiber pressure sensor array detects pressure profiles and body position(s) of a subject (e.g., an athlete) for training and postural improvement purposes;
- game statistics/data. The optical fiber pressure sensor array acts as an additional data source for the purpose of obtaining more accurate game statistics.

### Gaming

The optical fiber pressure sensor array or grid of the invention can be used to provide a feedback regarding position(s), movement(s) or pressure profile(s) of one or more subjects interacting in a (virtual reality) game or program, in particular to ensure that said one or more subjects are not leaving a predefined active area.

This allows to prevent possible damages to the surroundings of the space where the (virtual reality) gamer(s) is/are playing, or the occurrence of dangerous situations or even injuries for the involved gamer(s).

For instance, in virtual reality games, one or more subjects may use VR glasses, which increase the risk of accidental collision with other subjects (e.g., other players) or objects (e.g., a wall or other obstacle) that are present in the surroundings due to the fact that they accidentally move out from a predefined area that they are supposed to occupy while playing.

### Car/truck safety

The optical fiber pressure sensor array or grid of the invention can be used to perform continuous monitoring of vital function(s) and/or changes in pressure profile(s) of a subject that is driving a car or truck in order to detect whether the subject is almost falling asleep, so that an alert signal can be operated accordingly.

### References

- 10, 110, 210, 310, 410, 510: Receiving optical fiber(s)
- 20, 120, 220, 320, 420, 520: Transmitting optical fiber(s)
- 30, 230, 330, 430, 530: Pressure sensor
- 40, 140, 240, 340: Mechanical structure
- 41, 141, 241: First layer of the mechanical structure
- 42, 142, 242: Second layer of the mechanical structure
- 50, 150, 250: Rigid light-scattering layer
- 160: Multiple segments
- 270: Additional layer
- 341: First (internal) layer of the mechanical structure (white scattering tape)
- 342: Second (intermediate) layer of the mechanical structure (black shielding material)
- 343: Third (external) black shielding material (flexible material)
- 351: First layer (white scattering tape)
- 352: Second layer (black shielding material)

- C: Crossing

## Claims

1. An optical fiber pressure sensor array or grid for location, vibration and/or motion sensing including:
- a plurality of receiving optical fibers (10), and
- a plurality of transmitting optical fibers (20),
wherein said plurality of receiving optical fibers (10) and said plurality of transmitting optical fibers (20) are arranged in a planar array and intersect to define intersecting points, each of said intersecting points defining a pressure sensor (30),
wherein a mechanical structure (40) is provided at one or both sides of each pressure sensor (30) to enhance fiber bending when a pressure is applied to the pressure sensor (30), said mechanical structure (40) including a first, internal layer (41) contacting a respective one of the optical fibers (10, 20) and made of a flexible, light-scattering material, and a second, external layer (42) made of a rigid material,
**characterized in that** said plurality of receiving optical fibers (10) and/or said plurality of transmitting optical fibers (20) is curved with a predefined diameter at the intersecting point defining the pressure sensor (30).

2. The optical fiber pressure sensor array or grid of claim 1,
**characterized in that**
the optical fibers (10, 20) are Polymer Optical Fibers (POF), preferably wherein the optical fibers (10, 20) are made of made of Poly(methyl methacrylate) (PMMA).

3. The optical fiber pressure sensor array or grid according to claim 1 or 2,
**characterized in that**
the first layer (41) of the mechanical structure (40) is made of a white silicone rubber and/or wherein the second layer (42) of the mechanical structure (40) is made of polyvinyl chloride (PVC).

4. The optical fiber pressure sensor array or grid according to any one of claims 1 to 3,
**characterized in that**
the mechanical structure (40) is provided at one side of the pressure sensor (30), and a rigid, light-scattering layer (50) is provided at the other side of the pressure sensor (30) opposite the mechanical structure (40), preferably wherein said rigid, light-scattering layer (50) is made of white polyvinyl chloride (PVC).

5. An optical fiber pressure sensor array or grid for location, vibration and/or motion sensing including:
- a plurality of receiving optical fibers (110), and
- a plurality of transmitting optical fibers (120),
wherein a corrugated mechanical structure (140) is provided at one or both sides of the optical fibers (110, 120) to establish an optical coupling between the transmitting and receiving optical fibers (110, 120) when a pressure is exerted on the optical fibers (110, 120), said corrugated mechanical structure (140) including a first, internal layer (141) contacting the optical fibers (110, 120) and made of a flexible, light-scattering material, and a second, external layer (142) made of a rigid material, and
said plurality of receiving optical fibers (110) and said plurality of transmitting optical fibers (120) extend in parallel in a planar array.

6. The optical fiber pressure sensor array or grid of claim 5,
**characterized in that**
the optical fibers (110, 120) are Polymer Optical Fibers (POF), preferably wherein the optical fibers (110, 120) are made of made of Poly(methyl methacrylate) (PMMA).

7. The optical fiber pressure sensor array or grid according to claim 5 or claim 6,
**characterized in that**
pairs of adjacent transmitting and receiving optical fibers (110, 120) are in contact with each other.

8. The optical fiber pressure sensor array or grid according to claim 5 or claim 6,
**characterized in that**
a gap (160) is defined between pairs of adjacent transmitting and receiving optical fibers (110, 120).

9. The optical fiber pressure sensor array or grid according to any one of claims 5 to 8,
**characterized in that**
the second layer (142) is made of a corrugated rigid material.

10. The optical fiber pressure sensor array or grid according to any one of claims 5 to 9,
**characterized in that**
the first layer (141) of the mechanical structure (140) is made of white silicone rubber and/or wherein the second layer (142) of the mechanical structure (140) is made polyvinyl chloride (PVC).

11. The optical fiber pressure sensor array or grid according to any one of claims 5 to 10,
**characterized in that**
the mechanical structure (140) is provided at one side of the optical fibers (110, 120), and a corresponding rigid, light-scattering layer (150) is provided at the other side of the optical fibers (110, 120) opposite the mechanical structure (140), preferably wherein said rigid, light-scattering layer (150) is made of white polyvinyl chloride (PVC).

12. The optical fiber pressure sensor array or grid according to any one of claims 5 to 11,
**characterized in that**
the mechanical structure (140) includes multiple segments (160), preferably wherein said multiple segments (160) are configured and arranged to be independently controlled.

13. A mattress including the optical fiber pressure sensor array or grid for location, vibration and/or motion sensing of any one of claims 1 to 12.

## Patentansprüche

1. Lichtleitfaser-Drucksensoranordnung oder -gitter zur Orts-, Vibrations- oder Bewegungserfassung, umfassend:
- eine Vielzahl von Empfangslichtleitfasern (10), und
- eine Vielzahl von Übertragungslichtleitfasern (20),
wobei die Vielzahl von Empfangslichtleitfasern (10) und die Vielzahl von Übertragungslichtleitfasern (20) in einer planaren Anordnung angeordnet sind und sich überschneiden, um Überschneidungspunkte zu bilden, wobei jeder der Überschneidungspunkte einen Drucksensor (30) bildet,
wobei eine mechanische Struktur (40) an einer oder beiden Seiten jedes Drucksensors (30) vorgesehen ist, um die Faserbiegung zu verstärken, wenn ein Druck auf den Drucksensor (30) aufgebracht wird, wobei die mechanische Struktur (40) eine erste, innenliegende Schicht (41) umfasst, die eine jeweilige Lichtleitfaser (10, 20) berührt und aus einem flexiblen lichtstreuenden Material besteht, und eine zweite, außenliegende Schicht (42), die aus einem starren Material besteht,
**dadurch gekennzeichnet, dass**
die Vielzahl von Empfangslichtleitfasern (10) und/oder die Vielzahl von Übertragungslichtleitfasern (20) an dem den Drucksensor (30) bildenden Überschneidungspunkt mit einem vorgegebenen Durchmesser gekrümmt sind.

2. Lichtleitfaser-Drucksensoranordnung oder -gitter nach Anspruch 1,
**dadurch gekennzeichnet, dass**
die Lichtleitfasern (10, 20) polymeroptische Fasern (POF) sind, vorzugsweise wobei die Lichtleitfasern (10, 20) aus Polymethylmethacrylat (PMMA) bestehen.

3. Lichtleitfaser-Drucksensoranordnung oder -gitter nach Anspruch 1 oder 2,
**dadurch gekennzeichnet, dass**
die erste Schicht (41) der mechanischen Struktur (40) aus weißem Silikonkautschuk besteht und/oder die zweite Schicht (42) der mechanischen Struktur (40) aus Polyvinylchlorid (PVC) besteht.

4. Lichtleitfaser-Drucksensoranordnung oder -gitter nach einem der Ansprüche 1 bis 3,
**dadurch gekennzeichnet, dass**
die mechanische Struktur (40) an einer Seite des Drucksensors (30) vorgesehen ist und eine starre lichtstreuende Schicht (50) an der anderen, zur mechanischen Struktur (40) entgegengesetzten Seite des Drucksensors (30) vorgesehen ist, vorzugsweise wobei die starre lichtstreuende Schicht (50) aus weißem Polyvinylchlorid (PVC) besteht.

5. Lichtleitfaser-Drucksensoranordnung oder -gitter zur Orts-, Vibrations- oder Bewegungserfassung, umfassend:
- eine Vielzahl von Empfangslichtleitfasern (110), und
- eine Vielzahl von Übertragungslichtleitfasern (120),
wobei eine gewellte mechanische Struktur (140) an einer oder an beiden Seiten der Lichtleitfasern (110, 120) vorgesehen ist, um eine optische Kopplung zwischen den Übertragungs- und Empfangslichtleitfasern (110, 120) herzustellen, wenn auf die Lichtleitfasern (110, 120) ein Druck ausgeübt wird, wobei die gewellte mechanische Struktur (140) eine erste, innenliegende Schicht (141) umfasst, die die Lichtleitfasern (110, 120) berührt und aus einem flexiblen lichtstreuenden Material besteht, und eine zweite, außenliegende Schicht (142), die aus einem starren Material besteht, und
die Vielzahl von Empfangslichtleitfasern (110) und die Vielzahl von Übertragungslichtleitfasern (120) sich parallel in einer planaren Anordnung erstrecken.

6. Lichtleitfaser-Drucksensoranordnung oder -gitter nach Anspruch 5,
**dadurch gekennzeichnet, dass**
die Lichtleitfasern (110, 120) polymeroptische Fasern (POF) sind, vorzugsweise wobei die Lichtleitfasern (110, 120) aus Polymethylmethacrylat (PMMA) bestehen.

7. Lichtleitfaser-Drucksensoranordnung oder -gitter nach Anspruch 5 oder Anspruch 6,
**dadurch gekennzeichnet, dass**
Paare von benachbarten Übertragungs- und Empfangslichtleitfasern (110, 120) miteinander in Kontakt stehen.

8. Lichtleitfaser-Drucksensoranordnung oder -gitter nach Anspruch 5 oder Anspruch 6,
**dadurch gekennzeichnet, dass**
ein Spalt (160) zwischen Paaren von benachbarten Übertragungs- und Empfangslichtleitfasern (110, 120) gebildet ist.

9. Lichtleitfaser-Drucksensoranordnung oder -gitter nach einem der Ansprüche 5 bis 8,
**dadurch gekennzeichnet, dass**
die zweite Schicht (142) aus einem gewellten, starren Material besteht.

10. Lichtleitfaser-Drucksensoranordnung oder -gitter nach einem der Ansprüche 5 bis 9,
**dadurch gekennzeichnet, dass**
die erste Schicht (141) der mechanischen Struktur (140) aus weißem Silikonkautschuk besteht und/oder die zweite Schicht (142) der mechanischen Struktur (140) aus Polyvinylchlorid (PVC) besteht.

11. Lichtleitfaser-Drucksensoranordnung oder -gitter nach einem der Ansprüche 5 bis 10,
**dadurch gekennzeichnet, dass**
die mechanische Struktur (140) an einer Seite der Lichtleitfasern (110, 120) vorgesehen ist und eine entsprechende starre lichtstreuende Schicht (150) an der anderen, zur mechanischen Struktur (140) entgegengesetzten Seite der Lichtleitfasern (110, 120) vorgesehen ist, vorzugsweise wobei die starre lichtstreuende Schicht (150) aus weißem Polyvinylchlorid (PVC) besteht.

12. Lichtleitfaser-Drucksensoranordnung oder -gitter nach einem der Ansprüche 5 bis 11,
**dadurch gekennzeichnet, dass**
die mechanische Struktur (140) mehrere Segmente (160) umfasst, vorzugsweise wobei die mehreren Segmente (160) dafür ausgelegt und eingerichtet sind, unabhängig gesteuert zu werden.

13. Matratze, umfassend die Lichtleitfaser-Drucksensoranordnung oder das Lichtleitfaser-Drucksensorgitter zur Orts-, Vibrations- oder Bewegungserfassung nach einem der Ansprüche 1 bis 12.

## Revendications

1. Agencement ou réseau de capteurs de pression à fibre optique pour la détection de positions, de vibrations ou de mouvements, comprenant :
- une pluralité de fibres optiques réceptrices (10), et
- une pluralité de fibres optiques émettrices (20),
la pluralité de fibres optiques réceptrices (10) et la pluralité de fibres optiques émettrices (20) étant disposées dans un agencement plan et se croisant pour former des points d'intersection, chacun des points d'intersection formant un capteur de pression (30),
une structure mécanique (40) étant prévue sur un ou les deux côtés de chaque capteur de pression (30) afin de renforcer la flexion des fibres lorsqu'une pression est appliquée sur le capteur de pression (30), la structure mécanique (40) comprenant une première couche interne (41) en contact avec une fibre optique respective (10, 20) et constituée d'un matériau flexible diffusant la lumière, et une deuxième couche externe (42) constituée d'un matériau rigide,
**caractérisé en ce que**
la pluralité de fibres optiques réceptrices (10) et/ou la pluralité de fibres optiques émettrices (20) sont courbées selon un diamètre prédéfini au point d'intersection formant le capteur de pression (30).

2. L'agencement ou réseau de capteurs de pression à fibre optique selon la revendication 1,
**caractérisé en ce que**
les fibres optiques (10, 20) sont des fibres optiques polymères (POF), de préférence les fibres optiques (10, 20) étant constituées de polyméthacrylate de méthyle (PMMA).

3. L'agencement ou réseau de capteurs de pression à fibre optique selon la revendication 1 ou 2,
**caractérisé en ce que**
la première couche (41) de la structure mécanique (40) est constituée de caoutchouc silicone blanc et/ou la deuxième couche (42) de la structure mécanique (40) est constituée de chlorure de polyvinyle (PVC).

4. L'agencement ou réseau de capteurs de pression à fibre optique selon l'une quelconque des revendications 1 à 3,
**caractérisé en ce que**
la structure mécanique (40) est prévue sur un côté du capteur de pression (30) et une couche rigide diffusant la lumière (50) est prévue sur l'autre côté du capteur de pression (30), opposé à la structure mécanique (40), de préférence la couche rigide diffusant la lumière (50) étant constituée de polychlorure de vinyle (PVC) blanc.

5. L'agencement ou réseau de capteurs de pression à fibre optique pour la détection de positions, de vibrations ou de mouvements, comprenant :
- une pluralité de fibres optiques réceptrices (110), et
- une pluralité de fibres optiques émettrices (120),
une structure mécanique ondulée (140) étant prévue sur un ou les deux côtés des fibres optiques (110, 120) afin d'établir un couplage optique entre les fibres optiques émettrices et réceptrices (110, 120) lorsqu'une pression est exercée sur les fibres optiques (110, 120), la structure mécanique ondulée (140) comprenant une première couche interne (141) en contact avec les fibres optiques (110, 120) et constituée d'un matériau flexible diffusant la lumière, et une deuxième couche externe (142) constituée d'un matériau rigide, et
la pluralité de fibres optiques réceptrices (110) et la pluralité de fibres optiques émettrices (120) s'étendent parallèlement dans un agencement plan.

6. L'agencement ou réseau de capteurs de pression à fibre optique selon la revendication 5,
**caractérisé en ce que**
les fibres optiques (110, 120) sont des fibres optiques polymères (POF), de préférence les fibres optiques (110, 120) étant constituées de polyméthacrylate de méthyle (PMMA).

7. L'agencement ou réseau de capteurs de pression à fibre optique selon la revendication 5 ou la revendication 6,
**caractérisé en ce que**
des paires de fibres optiques émettrices et réceptrices adjacentes (110, 120) sont en contact les unes avec les autres.

8. L'agencement ou réseau de capteurs de pression à fibre optique selon la revendication 5 ou la revendication 6,
**caractérisé en ce qu'**
un espace (160) est formé entre des paires de fibres optiques émettrices et réceptrices adjacentes (110, 120).

9. L'agencement ou réseau de capteurs de pression à fibre optique selon l'une quelconque des revendications 5 à 8,
**caractérisé en ce que**
la deuxième couche (142) est constituée d'un matériau rigide ondulé.

10. L'agencement ou réseau de capteurs de pression à fibre optique selon l'une quelconque des revendications 5 à 9,
**caractérisé en ce que**
la première couche (141) de la structure mécanique (140) est constituée de caoutchouc silicone blanc et/ou la deuxième couche (142) de la structure mécanique (140) est constituée de chlorure de polyvinyle (PVC).

11. L'agencement ou réseau de capteurs de pression à fibre optique selon l'une quelconque des revendications 5 à 10,
**caractérisé en ce que**
la structure mécanique (140) est prévue sur un côté des fibres optiques (110, 120) et une couche rigide diffusant la lumière (150) correspondante est prévue sur l'autre côté des fibres optiques (110, 120), opposé à la structure mécanique (140), de préférence la couche rigide diffusant la lumière (150) étant constituée de polychlorure de vinyle (PVC) blanc.

12. L'agencement ou réseau de capteurs de pression à fibre optique selon l'une quelconque des revendications 5 à 11,
**caractérisé en ce que**
la structure mécanique (140) comprend plusieurs segments (160), de préférence lesdits plusieurs segments (160) étant conçus et agencés pour être commandés indépendamment.

13. Matelas comprenant l'agencement ou le réseau de capteurs de pression à fibre optique pour la détection de positions, de vibrations ou de mouvements selon l'une quelconque des revendications 1 à 12.
